# EUROPÄISCHE PATENTANMELDUNG

(11) **EP 4 202 790 A1**
(43) Veröffentlichungstag der Anmeldung: **28.06.2023**
(21) Anmeldenummer: 21216241.6
(22) Anmeldetag: 21.12.2021
(51) Int. Cl.: G06N 5/04, G06K 9/62, G06V 20/56, G06N 5/02

(54) **VERFAHREN UND SYSTEM ZUR KLASSIFIKATION VON VERKEHRSSITUATIONEN SOWIE TRAININGSVERFAHREN**

(71) Anmelder: dSPACE GmbH, 33102 Paderborn (DE)
(72) Erfinder: Karaman, Luka, 10000 Zagreb (HR); Diklic, Vjekoslav, 10000 Zagreb (HR); Sowa, Cathrina, 33102 Paderborn (DE); Rossi, Andre, 33102 Paderborn (DE)

(57) **Zusammenfassung**

Die Erfindung betrifft ein computerimplementiertes Verfahren und System zur Klassifikation von Verkehrssituationen (VS) eines virtuellen Tests. Das Verfahren umfasst ein Konkatenieren (S3) einer Mehrzahl der bestimmten Datensegmente (14) lateralen und longitudinalen Verhaltens des Ego-Fahrzeugs (12) zum Identifizieren von Fahrzeugaktionen (16) und ein Klassifizieren (S4) von Verkehrssituationen (VS) durch Verknüpfen einer Teilmenge der bestimmten Datensegmente (14) lateralen und longitudinalen Verhaltens des Ego-Fahrzeugs (12) mit den identifizierten Fahrzeugaktionen (16). Die Erfindung umfasst des Weiteren ein computerimplementiertes Verfahren zum Bereitstellen eines trainierten Algorithmus maschinellen Lernens zur Klassifikation von Verkehrssituationen (VS) eines virtuellen Tests.

## Beschreibung

Die vorliegende Erfindung betrifft ein computerimplementiertes Verfahren zur Klassifikation von Verkehrssituationen eines virtuellen Tests.

Die vorliegende Erfindung betrifft des Weiteren ein computerimplementiertes Verfahren zum Bereitstellen eines trainierten Algorithmus maschinellen Lernens zur Klassifikation von Verkehrssituationen eines virtuellen Tests.

Darüber hinaus betrifft die Erfindung ein System zur Klassifikation von Verkehrssituationen eines virtuellen Tests.

### Stand der Technik

Zur Erstellung von Testszenarien für Simulationen ist die Durchführung von Testfahrten erforderlich. Die hierdurch gewonnenen Sensordaten werden sodann in ein logisches Szenario abstrahiert.

Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen.

"Szenario-Optimierung für die Absicherung von automatisierten und autonomen Fahrsystemen" offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

Es wird davon ausgegangen, dass bestimmte Parameter einen großen Einfluss auf die Situation ausüben. Zum Beispiel wird eine Situation, in der eine Notbremsung stattfindet, hauptsächlich durch die Geschwindigkeiten der beiden Verkehrsteilnehmer bestimmt. Für den Anwender ist es daher von entscheidender Bedeutung, eine Verteilung der Werte dieser Parameter zu kennen und zu wissen, welche Teile nicht durch die Daten oder die Simulation abgedeckt sind. Die fehlenden Datenpunkte müssen entweder in der Realität oder in der Simulation gesammelt werden.

Für den Anwender ist daher eine effektive Auswertung des erzeugten Datensatzes wünschenswert, um kritische Situationen zu identifizieren und in leicht variierten Versionen desselben Simulationsszenarios zu testen.

Demzufolge besteht ein Bedarf, bestehende Verfahren zur Analyse von Fahrszenarien-Datensätzen dahingehend zu verbessern, dass eine effektive Identifizierung und Kategorisierung kritischer Situationen ermöglicht werden kann.

Es ist daher Aufgabe der Erfindung, ein Verfahren zur Klassifikation von Verkehrssituationen eines virtuellen Tests bereitzustellen, welches eine effektive Identifizierung und Kategorisierung kritischer Verkehrssituationen ermöglicht.

### Offenbarung der Erfindung

Die Aufgabe wird erfindungsgemäß durch ein computerimplementiertes Verfahren zur Klassifikation von Verkehrssituationen eines virtuellen Tests mit den Merkmalen des Patentanspruchs 1 gelöst.

Die Aufgabe wird erfindungsgemäß ferner durch ein computerimplementiertes Verfahren zum Bereitstellen eines trainierten Algorithmus maschinellen Lernens zur Klassifikation von Verkehrssituationen eines virtuellen Tests mit den Merkmalen des Patentanspruchs 14 gelöst.

Die Aufgabe wird erfindungsgemäß ferner durch ein System zur Klassifikation von Verkehrssituationen eines virtuellen Tests mit den Merkmalen des Patentanspruchs 15 gelöst.

Die Erfindung betrifft ein computerimplementiertes Verfahren zur Klassifikation von Verkehrssituationen eines virtuellen Tests.

Das Verfahren umfasst ein Bereitstellen eines ersten Datensatzes von Sensordaten einer durch eine erste Mehrzahl fahrzeugseitiger Umfelderkennungsensoren erfassten Fahrt eines Ego-Fahrzeugs sowie ein Bestimmen von durch den ersten Datensatz umfassten Datensegmenten lateralen und longitudinalen Verhaltens des Ego-Fahrzeugs.

Des Weiteren umfasst das Verfahren ein Konkatenieren einer Mehrzahl der bestimmten Datensegmente lateralen und longitudinalen Verhaltens des Ego-Fahrzeugs zum Identifizieren von Fahrzeugaktionen sowie ein Klassifizieren von Verkehrssituationen durch Verknüpfen einer Teilmenge der bestimmten Datensegmente lateralen und longitudinalen Verhaltens des Ego-Fahrzeugs mit den identifizierten Fahrzeugaktionen.

Das Verfahren umfasst darüber hinaus ein Ausgeben eines, eine Mehrzahl von Klassen aufweisenden zweiten Datensatzes, wobei eine jeweilige Klasse der Mehrzahl von Klassen eine Verkehrssituation des virtuellen Tests repräsentiert.

Die Erfindung betrifft überdies ein computerimplementiertes Verfahren zum Bereitstellen eines trainierten Algorithmus maschinellen Lernens zur Klassifikation von Verkehrssituationen eines virtuellen Tests.

Das Verfahren umfasst ein Empfangen eines ersten Trainingsdatensatzes von Sensordaten einer durch eine erste Mehrzahl fahrzeugseitiger Umfelderkennungsensoren erfassten Fahrt eines Ego-Fahrzeugs sowie ein Empfangen eines zweiten Trainingsdatensatzes, welcher eine Mehrzahl von Klassen aufweist, wobei eine jeweilige Klasse der Mehrzahl von Klassen eine Verkehrssituation des virtuellen Tests repräsentiert.

Des Weiteren umfasst das Verfahren ein Trainieren des Algorithmus maschinellen Lernens durch einen Optimierungsalgorithmus, welcher einen Extremwert einer Verlustfunktion zur Klassifikation von Verkehrssituationen des virtuellen Tests berechnet.

Die Erfindung betrifft überdies ein System zur Klassifikation von Verkehrssituationen eines virtuellen Tests. Das System umfasst eine erste Mehrzahl fahrzeugseitiger Umfelderkennungsensoren zum Bereitstellen eines ersten Datensatzes von Sensordaten einer Fahrt eines Ego-Fahrzeugs.

Des Weiteren umfasst das System Mittel zum Bestimmen von durch den ersten Datensatz umfassten Datensegmenten lateralen und longitudinalen Verhaltens des Ego-Fahrzeugs sowie Mittel zum Konkatenieren einer Mehrzahl der bestimmten Datensegmente lateralen und longitudinalen Verhaltens des Ego-Fahrzeugs zum Identifizieren von Fahrzeugaktionen.

Das System umfasst ferner Mittel zum Klassifizieren von Verkehrssituationen durch Verknüpfen einer Teilmenge der bestimmten Datensegmente lateralen und longitudinalen Verhaltens des Ego-Fahrzeugs mit den identifizierten Fahrzeugaktionen und Mittel zum Ausgeben eines, eine Mehrzahl von Klassen aufweisenden zweiten Datensatzes, wobei eine jeweilige Klasse der Mehrzahl von Klassen eine Verkehrssituation des virtuellen Tests repräsentiert.

Eine Idee der vorliegenden Erfindung ist es, eine verbesserte Datenselektion und Parameterextraktion von in dem Datensatz von Sensordaten der durch die erste Mehrzahl fahrzeugseitiger Umfelderkennungsensoren erfassten Fahrt eines Ego-Fahrzeugs enthaltenen Verkehrssituationen durchzuführen.

Somit können die Daten mit Hilfe von Vorlagen automatisch nach relevanten Situationen durchsucht und anschließend nur die entsprechend extrahierten Verkehrssituationen in die Simulation gebracht werden.

Ferner extrahieren die Vorlagen Parameterwerte der relevanten Parameter. Durch das Sammeln von Parameterwerten, die von derselben Vorlage für ähnliche Situationen extrahiert wurden, kann eine Verteilung erstellt werden, und es können Aussagen darüber getroffen werden, wie diese Parameter variiert werden müssen, um unbekannte und mögliche kritische Situationen in der Simulation abzudecken.

Unter einer Verkehrssituation ist hierbei ein Klein-, Elementar- und/oder größeres Szenario bzw. Verkehrsszenario mit einer Mehrzahl von Verkehrsteilnehmern zu verstehen.

Vorlagen bestehen aus verschiedenen Algorithmen, die auf verschiedenen Abstraktionsebenen unterschiedliche Dinge erkennen. Die Algorithmen sind im Rahmen der vorliegenden Erfindung durch den ersten, zweiten und dritten regelbasierten Algorithmus gebildet.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der erste Datensatz weitere Sensordaten einer durch eine zweite Mehrzahl fahrzeugseitiger Umfelderkennungsensoren erfassten Fahrt zumindest eines Fellow-Fahrzeugs und/oder weiterer Verkehrsteilnehmer umfasst. Somit können in vorteilhafter Weise ebenfalls Daten der weiteren Verkehrsteilnehmer zum Klassifizieren von Verkehrssituation herangezogen werden.

Gemäß einer weiteren bevorzugten Weiterbildung der Erfindung ist vorgesehen, dass durch den ersten Datensatz umfasste Datensegmente lateralen und longitudinalen Verhaltens des zumindest einen Fellow-Fahrzeugs und/oder der weiteren Verkehrsteilnehmer bestimmt werden, wobei eine Mehrzahl der bestimmten Datensegmente lateralen und longitudinalen Verhaltens des zumindest einen Fellow-Fahrzeugs und/oder weiterer Verkehrsteilnehmer zum Identifizieren von Fahrzeugaktionen konkateniert werden, und wobei Verkehrssituationen durch Verknüpfen einer Teilmenge der bestimmten Datensegmente lateralen und longitudinalen Verhaltens des zumindest einen Fellow-Fahrzeugs und/oder weiterer Verkehrsteilnehmer mit den identifizierten Fahrzeugaktionen klassifiziert werden.

Somit können in vorteilhafter Weise aus den jeweils einzelnen Datensegmenten lateralen und longitudinalen Verhaltens der Verkehrsteilnehmer Fahrzeugaktionen klassifiziert werden.

Gemäß einer weiteren bevorzugten Weiterbildung der Erfindung ist vorgesehen, dass die klassifizierten Verkehrssituationen des Ego-Fahrzeugs und des zumindest einen Fellow-Fahrzeugs und/oder der weiteren Verkehrsteilnehmer zu einer das Ego-Fahrzeug und das zumindest eine Fellow-Fahrzeugs und/oder die weiteren Verkehrsteilnehmer umfassenden Interaktion verknüpft werden.

Die durch jeweilige Daten einzelner Verkehrsteilnehmer erzeugten Modelle bzw. Verkehrssituation werden somit in vorteilhafter Weise zu einem Gesamtszenario verknüpft, welches sämtliche Daten aller Verkehrsteilnehmer umfasst.

Gemäß einer weiteren bevorzugten Weiterbildung der Erfindung ist vorgesehen, dass bei dem Identifizieren von Fahrzeugaktionen die Datensegmente lateralen und longitudinalen Verhaltens des Ego-Fahrzeugs zu Gruppen zusammengefasst werden.

Das Zusammenfassen zu Gruppen, insbesondere in chronologischer Reihenfolge ermöglicht somit in vorteilhafter Weise die einzelnen Datensegmente zu einer Fahrzeugaktion wie beispielsweise ein Überholmanöver oder ein Fahrspurwechsel zu abstrahieren.

Gemäß einer weiteren bevorzugten Weiterbildung der Erfindung ist vorgesehen, dass das Bestimmen von durch den ersten Datensatz umfassten Datensegmenten lateralen und longitudinalen Verhaltens des Ego-Fahrzeugs durch Anwenden eines ersten regelbasierten Algorithmus durchgeführt wird, wobei das Konkatenieren der Mehrzahl der bestimmten Datensegmente lateralen und longitudinalen Verhaltens des Ego-Fahrzeugs zum Identifizieren von Fahrzeugaktionen durch Anwenden eines zweiten regelbasierten Algorithmus durchgeführt wird, und wobei das Klassifizieren von Verkehrssituationen durch Verknüpfen der Teilmenge der bestimmten Datensegmente lateralen und longitudinalen Verhaltens des Ego-Fahrzeugs mit den identifizierten Fahrzeugaktionen durch Anwenden eines dritten regelbasierten Algorithmus durchgeführt wird.

Durch das Verwenden einer Mehrzahl regelbasierter Algorithmen kann das erfindungsgemäße mehrschichtige Modell Klassifizierungen von Verkehrssituationen effizient aufbauen.

Gemäß einer weiteren bevorzugten Weiterbildung der Erfindung ist vorgesehen, dass der erste regelbasierte Algorithmus, der zweite regelbasierte Algorithmus und der dritte regelbasierte Algorithmus jeweils unterschiedliche Regelwerke zur Verarbeitung von durch den jeweiligen Algorithmus empfangenen Eingabedaten umfassen. Jedes der Regelwerke ist dabei einer der vorhergehenden erwähnten Aufgaben gewidmet, welche auf einer jeweiligen Schichtebene durchgeführt werden.

Gemäß einer weiteren bevorzugten Weiterbildung der Erfindung ist vorgesehen, dass Parameter der klassifizierten Verkehrssituationen und/oder Interaktionen zum Erzeugen einer Parameterverteilung eines vorgegebenen Parameterraums extrahiert werden. Somit kann in vorteilhafter Weise festgestellt werden, welche Parameter in dem vorgegebenen Parameterraum bereits abgedeckt sind und welche noch zu ermitteln sind.

Gemäß einer weiteren bevorzugten Weiterbildung der Erfindung ist vorgesehen, dass die Datensegmente lateralen und longitudinalen Verhaltens des Ego-Fahrzeugs eine konstante oder sich ändernde Beschleunigung, Positionsdaten, insbesondere GNSS-Daten, und eine sich daraus ergebende Geschwindigkeit umfassen. Aus diesen Datensegmenten können sodann in der darauffolgenden Schicht Fahrzeugaktionen bestimmt werden.

Gemäß einer weiteren bevorzugten Weiterbildung der Erfindung ist vorgesehen, dass die Datensegmente lateralen und longitudinalen Verhaltens des Ego-Fahrzeugs durch Vektoren gebildet sind, wobei bei dem Konkatenieren der Mehrzahl der bestimmten Datensegmente lateralen und longitudinalen Verhaltens des Ego-Fahrzeugs zum Identifizieren von Fahrzeugaktionen jeweilige Vektoren addiert werden. Das Kodieren der Datensegmente durch Vektoren weist den Vorteil auf, dass diese in darauffolgenden Ebenen in effizienter Weise zusammengefügt werden können.

Gemäß einer weiteren bevorzugten Weiterbildung der Erfindung ist vorgesehen, dass die Sensordaten der durch die erste Mehrzahl fahrzeugseitiger Umfelderkennungsensoren erfassten Fahrt des Ego-Fahrzeugs Positionsdaten eines GNSS-Sensors, IMU-Daten, Kameradaten, LiDAR-Daten und/oder Radardaten sind, wobei die Sensordaten annotiert sind. Somit können Sensordaten eine Mehrzahl unterschiedlicher Sensoren herangezogen werden, wodurch eine Genauigkeit einer Klassifizierung der Verkehrssituationen erhöht werden kann.

Gemäß einer weiteren bevorzugten Weiterbildung der Erfindung ist vorgesehen, dass auf Basis der klassifizierten Verkehrssituationen und/oder Interaktionen ein, ein logisches Verkehrsszenario aufweisender dritter Datensatz erzeugt wird. Die extrahierten, für den Anwender interessanten bzw. kritischen Verkehrssituationen und/oder Interaktionen bilden somit das durch den dritten Datensatz umfasste logische Verkehrszenario.

Gemäß einer weiteren bevorzugten Weiterbildung der Erfindung ist vorgesehen, dass die Fahrzeugaktionen einen Richtungswechsel und/oder einen Fahrspurwechsel des Ego-Fahrzeugs und/oder des zumindest einen Fellow-Fahrzeugs und/oder eine Interaktion des Ego-Fahrzeugs mit einem Fußgänger, und die klassifizierten Verkehrssituationen einen Überholvorgang des Ego-Fahrzeugs und/oder des zumindest einen Fellow-Fahrzeugs umfassen. Es können somit in vorteilhafter Weise eine Vielzahl unterschiedlicher Fahrzeugaktionen aus den Daten extrahiert werden.

Die hierin beschriebenen Merkmale des computerimplementierten Verfahrens zur Klassifikation von Verkehrssituationen eines virtuellen Tests sind ebenso auf das erfindungsgemäße System zur Klassifikation von Verkehrssituationen eines virtuellen Tests und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zur Klassifikation von Verkehrssituationen eines virtuellen Tests gemäß einer bevorzugten Ausführungsform der Erfindung;
- Fig. 2: eine Werteverteilung extrahierter sowie nicht extrahierter Parameterwerte des virtuellen Tests gemäß der bevorzugten Ausführungsform der Erfindung;
- Fig. 3: ein Ablaufdiagramm eines computerimplementierten Verfahrens zum Bereitstellen eines trainierten Algorithmus maschinellen Lernens zur Klassifikation von Verkehrssituationen eines virtuellen Tests; und
- Fig. 4: eine schematische Darstellung eines Systems zur Klassifikation von Verkehrssituationen eines virtuellen Tests gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

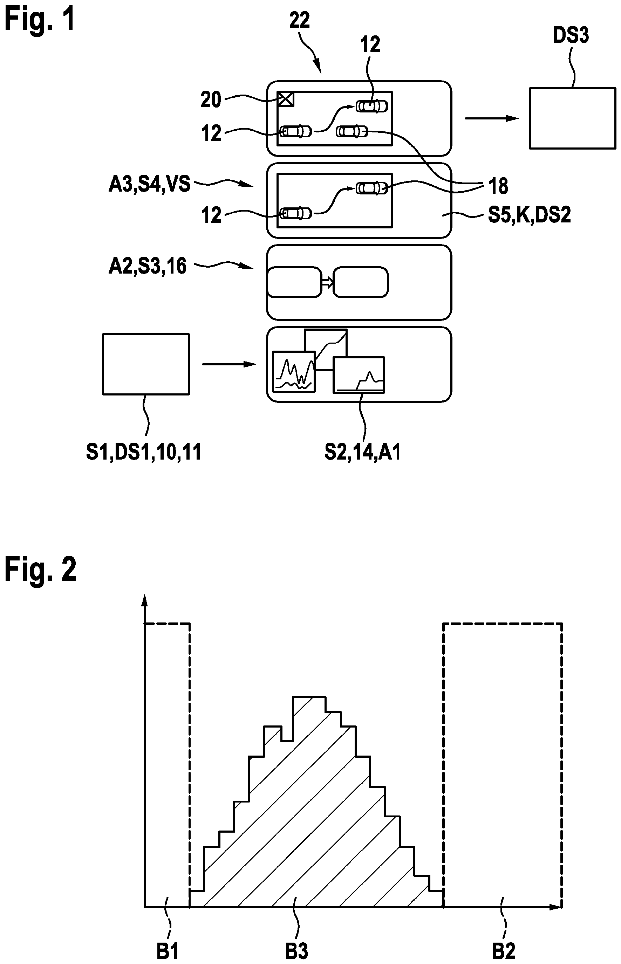

Das in Fig. 1 gezeigte Verfahren umfasst ein Bereitstellen S1 eines ersten Datensatzes DS1 von Sensordaten einer durch eine erste Mehrzahl fahrzeugseitiger Umfelderkennungsensoren 10 erfassten Fahrt eines Ego-Fahrzeugs 12 sowie ein Bestimmen S2 von durch den ersten Datensatz DS1 umfassten Datensegmenten 14 lateralen und longitudinalen Verhaltens des Ego-Fahrzeugs 12.

Das Verfahren umfasst des Weiteren ein Konkatenieren S3 einer Mehrzahl der bestimmten Datensegmente 14 lateralen und longitudinalen Verhaltens des Ego-Fahrzeugs 12 zum Identifizieren von Fahrzeugaktionen 16 und ein Klassifizieren S4 von Verkehrssituationen VS durch Verknüpfen einer Teilmenge der bestimmten Datensegmente 14 lateralen und longitudinalen Verhaltens des Ego-Fahrzeugs 12 mit den identifizierten Fahrzeugaktionen 16.

Darüber hinaus umfasst das Verfahren ein Ausgeben S5 eines, eine Mehrzahl von Klassen K aufweisenden zweiten Datensatzes DS2, wobei eine jeweilige Klasse K der Mehrzahl von Klassen K eine Verkehrssituation VS des virtuellen Tests repräsentiert.

Der erste Datensatz DS1 umfasst ferner weitere Sensordaten einer durch eine zweite Mehrzahl fahrzeugseitiger Umfelderkennungsensoren 11 erfassten Fahrt zumindest eines Fellow-Fahrzeugs 18 und/oder weiterer Verkehrsteilnehmer 20. Durch den ersten Datensatz DS1 umfasste Datensegmente 14 lateralen und longitudinalen Verhaltens des zumindest einen Fellow-Fahrzeugs 18 und/oder der weiteren Verkehrsteilnehmer 20 werden sodann bestimmt.

Eine Mehrzahl der bestimmten Datensegmente 14 lateralen und longitudinalen Verhaltens des zumindest einen Fellow-Fahrzeugs 18 und/oder weiterer Verkehrsteilnehmer 20 werden zum Identifizieren von Fahrzeugaktionen 16 konkateniert. Ferner werden Verkehrssituationen VS durch Verknüpfen einer Teilmenge der bestimmten Datensegmente 14 lateralen und longitudinalen Verhaltens des zumindest einen Fellow-Fahrzeugs 18 und/oder weiterer Verkehrsteilnehmer 20 mit den identifizierten Fahrzeugaktionen 16 klassifiziert.

Die klassifizierten Verkehrssituationen VS des Ego-Fahrzeugs 12 und des zumindest einen Fellow-Fahrzeugs 18 und/oder der weiteren Verkehrsteilnehmer 20 werden sodann zu einer das Ego-Fahrzeug 12 und das zumindest eine Fellow-Fahrzeugs 18 und/oder die weiteren Verkehrsteilnehmer 20 umfassenden Interaktion 22 verknüpft.

Bei dem Identifizieren von Fahrzeugaktionen 16 werden dabei die Datensegmente 14 lateralen und longitudinalen Verhaltens des Ego-Fahrzeugs 12 zu Gruppen zusammengefasst.

Das Bestimmen S2 von durch den ersten Datensatz DS1 umfassten Datensegmenten 14 lateralen und longitudinalen Verhaltens des Ego-Fahrzeugs 12 wird durch Anwenden eines ersten regelbasierten Algorithmus A1 durchgeführt.

Das Konkatenieren S3 der Mehrzahl der bestimmten Datensegmente 14 lateralen und longitudinalen Verhaltens des Ego-Fahrzeugs 12 zum Identifizieren von Fahrzeugaktionen 16 wird durch Anwenden eines zweiten regelbasierten Algorithmus A2 durchgeführt. Das Klassifizieren S4 von Verkehrssituationen VS durch Verknüpfen der Teilmenge der bestimmten Datensegmente 14 lateralen und longitudinalen Verhaltens des Ego-Fahrzeugs 12 mit den identifizierten Fahrzeugaktionen 16 wird ferner durch Anwenden eines dritten regelbasierten Algorithmus A3 durchgeführt.

Der erste regelbasierte Algorithmus A1, der zweite regelbasierte Algorithmus A2 und der dritte regelbasierte Algorithmus A3 umfassen jeweils unterschiedliche Regelwerke zur Verarbeitung von durch den jeweiligen Algorithmus empfangenen Eingabedaten. Parameter der klassifizierten Verkehrssituationen VS und/oder Interaktionen 22 werden zum Erzeugen einer Parameterverteilung eines vorgegebenen Parameterraums extrahiert.

Die Datensegmente 14 lateralen und longitudinalen Verhaltens des Ego-Fahrzeugs 12 umfassen beispielsweise eine konstante oder sich ändernde Beschleunigung, Positionsdaten, insbesondere GNSS-Daten, und eine sich daraus ergebende Geschwindigkeit. Die Datensegmente 14 lateralen und longitudinalen Verhaltens des Ego-Fahrzeugs 12 sind ferner durch Vektoren gebildet.

Bei dem Konkatenieren S3 der Mehrzahl der bestimmten Datensegmente 14 lateralen und longitudinalen Verhaltens des Ego-Fahrzeugs 12 werden zum Identifizieren von Fahrzeugaktionen 16 jeweilige Vektoren addiert. Die Sensordaten der durch die erste Mehrzahl fahrzeugseitiger Umfelderkennungsensoren 10 erfassten Fahrt des Ego-Fahrzeugs 12 sind Positionsdaten eines GNSS-Sensors, IMU-Daten, Kameradaten, LiDAR-Daten und/oder Radardaten, wobei die Sensordaten annotiert sind.

Auf Basis der klassifizierten Verkehrssituationen VS und/oder Interaktionen 22 wird dabei ein, ein logisches Verkehrsszenario aufweisender dritter Datensatz DS3 erzeugt.

Die Fahrzeugaktionen 16 umfassen beispielsweise einen Richtungswechsel und/oder einen Fahrspurwechsel des Ego-Fahrzeugs 12 und/oder des zumindest einen Fellow-Fahrzeugs 18 und/oder eine Interaktion 22 des Ego-Fahrzeugs 12 mit einem Fußgänger, und die klassifizierten Verkehrssituationen VS einen Überholvorgang des Ego-Fahrzeugs 12 und/oder des zumindest einen Fellow-Fahrzeugs 18.

Ferner können die Fahrzeugaktionen 16 eine oder mehrere der folgenden Verkehrssituationen VS umfassen: Ein Folgeverhalten von Fahrzeugen, wobei ein vorausfahrendes Fahrzeug stark abbremst, ein knappes Einscheren eines Fahrzeugs vor einem anderen Fahrzeug, ein Auffahren auf eine größere Straße mit fließendem Verkehr, ein Abbiegen eines Fahrzeugs an einer Kreuzung, wobei sich der Weg mit dem eines andern Fahrzeugs kreuzt, ein Abbiegen eines Fahrzeugs an einer Kreuzung in Kombination mit einer Interaktion 22 mit einem die Straße querendem Fußgänger, ein Fahren entlang einer Straße, die ein Fußgänger quert, ein Fahren entlang einer Straße, auf der ein Fußgänger in oder gegen die Fahrtrichtung läuft, ein Fahren entlang einer Straße, auf der ein Fahrradfahrer in oder gegen die Fahrtrichtung fährt und/oder ein Ausweichen eines auf der Straße angeordneten Hindernisses.

Mit Bezug auf Fig. 1 wird im Folgenden die Funktionalität des computerimplementierten Verfahrens zur Klassifikation von Verkehrssituationen VS eines virtuellen Tests am Beispiel eines Einfädelns mit anschließendem Auffahren erläutert.

Das Ego-Fahrzeug 12 hält seine Spur und fährt mit konstanter Geschwindigkeit. Das Fellow-Fahrzeug 18 fährt auf der Spur neben dem Ego-Fahrzeug 12, dann beschleunigt es und wechselt seine Spur auf die Spur des Ego-Fahrzeugs 12.

Die in Fig. 1 dargestellte unterste Schicht, welche von durch den ersten Datensatz DS1 umfasste Datensegmente lateralen und longitudinalen Verhaltens des Ego-Fahrzeugs 12 bestimmt, erhält den vollständigen Rohdatenstrom, einschließlich Straßeninformationen, Trajektorien und Geschwindigkeiten.

Diese Schicht abstrahiert den Datenstrom für jedes Fahrzeug 12, 14 in longitudinale Datensegmente mit konstanter Beschleunigung aus einer Geschwindigkeitsverteilung und laterale Aktionen wie Spurwechsel oder Spurhalten.

In der darüber liegenden Schicht, in welcher eine Mehrzahl der bestimmten Datensegmente 14 lateralen und longitudinalen Verhaltens des Ego-Fahrzeugs 12 zum Identifizieren von Fahrzeugaktionen 16 konkateniert S3 werden, wird ein Verhalten durch Clustern der lateralen und longitudinalen Atome erkannt. Anschließend wird eine erste Situation klassifiziert, indem das laterale und longitudinale Verhalten wieder zusammengefügt werden. Für das Ego-Fahrzeug bedeutet dies, dass das Halten der Fahrspur die Bedingungen der ersten beiden Schichten erfüllt. Für das Fellow-Fahrzeug 18 bedeutet dies, dass es in den Daten einen Spurwechsel geben muss.

Die Geschwindigkeit kann für beide Fahrzeuge bei der Datenauswahl vernachlässigt werden, wird aber für die Parametrisierung der Simulation oder die Parameterextraktion benötigt. Jedes Fahrzeug, das keinen Spurwechsel vornimmt, ist somit kein aktives Fahrzeug.

Die vierte Schicht, in welcher die klassifizierten Verkehrssituationen VS des Ego-Fahrzeugs 12 und des zumindest einen Fellow-Fahrzeugs 18 und/oder der weiteren Verkehrsteilnehmer 20 zu einer das Ego-Fahrzeug 12 und das zumindest eine Fellow-Fahrzeugs 18 und/oder die weiteren Verkehrsteilnehmer 20 umfassenden Interaktion 22 verknüpft werden, fasst die Situationen beider Fahrzeuge zu einer Interaktion zusammen.

Die Interaktionsschicht sorgt dafür, dass das Fellow-Fahrzeug 18 den Spurwechsel vor dem Ego-Fahrzeug 12 durchführt und dass eine Zeit bis zur Kollision unter einen bestimmten Schwellenwert fällt.

Würde z.B. das Fellow-Fahrzeug 18 den Spurwechsel weit entfernt vom Ego-Fahrzeug 12 oder sogar dahinter durchführen, wäre dieser Teil der Daten uninteressant. So kann jedes Fahrzeug und jeder Datenpunkt, der die Bedingungen aller Schichten nicht erfüllt, weggelassen werden, und am Ende existieren somit lediglich die beiden Fahrzeuge, die aktiv am Einfädeln teilnehmen, und nur die Bilder, in denen das Einfädeln stattfindet.

Jede Schicht besteht aus verschiedenen Algorithmen, die kombiniert werden können, um verschiedene Situationen zu erkennen. Mit leicht veränderten Bedingungen in einer der Schichten oder durch Hinzufügen z.B. einer Bedingung eines weiteren Spurwechsels könnte stattdessen ein Überholmanöver erkannt werden. Andere Algorithmen in verschiedenen Schichten können beispielsweise hinzugefügt werden, um ein Verhalten an Kreuzungen zu erkennen.

Nach der Situationsschicht existieren eine Reihe von logischen Blöcken bzw. Einheiten für jedes Fahrzeug, deren Anfangswerte durch die realen Daten parametrisiert sind. So sind z.B. die Anfangspositionen und - geschwindigkeiten oder der Punkt, an dem der Spurwechsel beginnt, bekannt. Dies sind die Parameter, die in einem simulationsbasierten Test variiert werden.

Fig. 2 zeigt eine Werteverteilung extrahierter sowie nicht extrahierter Parameterwerte des virtuellen Tests gemäß der bevorzugten Ausführungsform der Erfindung.

Eine Möglichkeit vor dem szenariobasierten Testen wäre, eine Vorlage auf viele ähnliche Datenströme anzuwenden und die Parameter zu extrahieren. Dies würde eine Verteilung erzeugen, die zeigt, welche Teile der Werteverteilung bereits abgedeckt sind (siehe Bereich B3) und welche fehlen (siehe Bereiche B1 und B2).

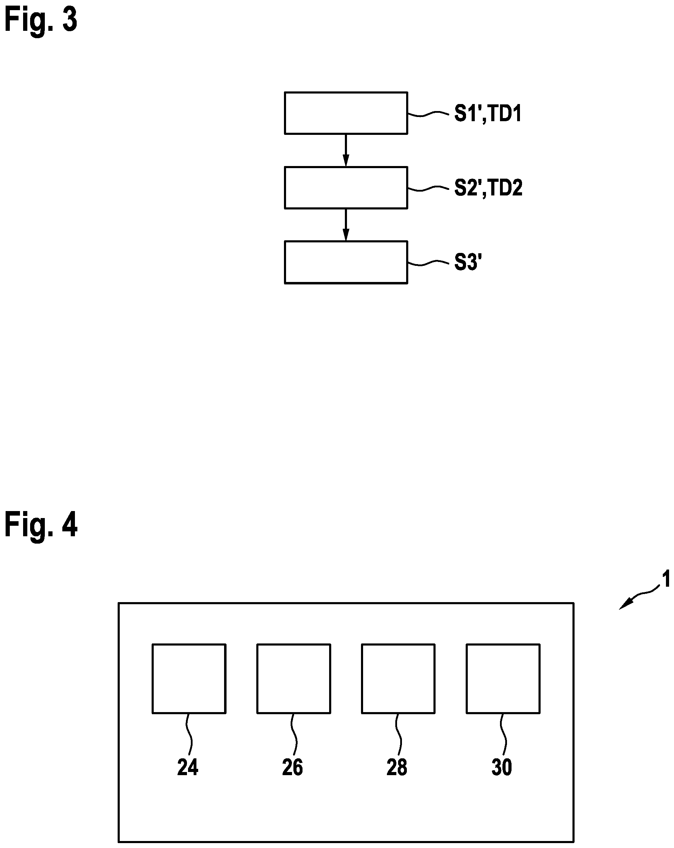

Fig. 3 zeigt ein Ablaufdiagramm eines computerimplementierten Verfahrens zum Bereitstellen eines trainierten Algorithmus maschinellen Lernens zur Klassifikation von Verkehrssituationen VS eines virtuellen Tests.

Das Verfahren umfasst ein Empfangen S1' eines ersten Trainingsdatensatzes TD1 von Sensordaten einer durch eine erste Mehrzahl fahrzeugseitiger Umfelderkennungsensoren 10 erfassten Fahrt eines Ego-Fahrzeugs 12 sowie ein Empfangen S2' eines zweiten Trainingsdatensatzes TD2, welcher eine Mehrzahl von Klassen K aufweist, wobei eine jeweilige Klasse K der Mehrzahl von Klassen K eine Verkehrssituation VS des virtuellen Tests repräsentiert.

Des Weiteren umfasst das Verfahren ein Trainieren S3' des Algorithmus maschinellen Lernens durch einen Optimierungsalgorithmus, welcher einen Extremwert einer Verlustfunktion zur Klassifikation von Verkehrssituationen VS des virtuellen Tests berechnet.

Fig. 4 zeigt eine schematische Darstellung eines Systems zur Klassifikation von Verkehrssituationen VS eines virtuellen Tests gemäß der bevorzugten Ausführungsform der Erfindung.

Das System umfasst eine erste Mehrzahl fahrzeugseitiger Umfelderkennungsensoren 10 zum Bereitstellen eines ersten Datensatzes DS1 von Sensordaten einer Fahrt eines Ego-Fahrzeugs 12 sowie Mittel 24 zum Bestimmen von durch den ersten Datensatz DS1 umfassten Datensegmenten 14 lateralen und longitudinalen Verhaltens des Ego-Fahrzeugs 12.

Ferner umfasst das System Mittel 26 zum Konkatenieren einer Mehrzahl der bestimmten Datensegmente 14 lateralen und longitudinalen Verhaltens des Ego-Fahrzeugs 12 zum Identifizieren von Fahrzeugaktionen 16 sowie Mittel 28 zum Klassifizieren von Verkehrssituationen VS durch Verknüpfen einer Teilmenge der bestimmten Datensegmente 14 lateralen und longitudinalen Verhaltens des Ego-Fahrzeugs 12 mit den identifizierten Fahrzeugaktionen 16.

Das System umfasst darüber hinaus Mittel 30 zum Ausgeben eines, eine Mehrzahl von Klassen K aufweisenden zweiten Datensatzes DS2, wobei eine jeweilige Klasse K der Mehrzahl von Klassen K eine Verkehrssituation VS des virtuellen Tests repräsentiert.

### Bezugszeichenliste

- 1: System
- 10: erste Mehrzahl fahrzeugseitiger Umfelderkennungsensoren
- 11: zweite Mehrzahl fahrzeugseitiger Umfelderkennungsensoren
- 12: Ego-Fahrzeug
- 14: Datensegmente
- 16: Fahrzeugaktionen
- 18: Fellow-Fahrzeug
- 20: weitere Verkehrsteilnehmer
- 22: Interaktion
- 24: Mittel
- 26: Mittel
- 28: Mittel
- 30: Mittel
- A1: erster regelbasierter Algorithmus
- A2: zweiter regelbasierter Algorithmus
- A3: dritter regelbasierter Algorithmus
- B1, B2, B3: Bereiche
- DS1: erster Datensatz von Sensordaten
- DS2: zweiter Datensatz von Sensordaten
- DS3: dritter Datensatz von Sensordaten
- K: Klasse(n)
- TD1: erster Trainingsdatensatz von Sensordaten
- TD2: zweiter Trainingsdatensatz von Sensordaten
- S1-S5: Verfahrensschritte
- S1'-S3': Verfahrensschritte
- VS: Verkehrssituationen

## Patentansprüche

1. Computerimplementiertes Verfahren zur Klassifikation von Verkehrssituationen (VS) eines virtuellen Tests, mit den Schritten:
Bereitstellen (S1) eines ersten Datensatzes (DS1) von Sensordaten einer durch eine erste Mehrzahl fahrzeugseitiger Umfelderkennungsensoren (10) erfassten Fahrt eines Ego-Fahrzeugs (12);
Bestimmen (S2) von durch den ersten Datensatz (DS1) umfassten Datensegmenten (14) lateralen und longitudinalen Verhaltens des Ego-Fahrzeugs (12);
Konkatenieren (S3) einer Mehrzahl der bestimmten Datensegmente (14) lateralen und longitudinalen Verhaltens des Ego-Fahrzeugs (12) zum Identifizieren von Fahrzeugaktionen (16);
Klassifizieren (S4) von Verkehrssituationen (VS) durch Verknüpfen einer Teilmenge der bestimmten Datensegmente (14) lateralen und longitudinalen Verhaltens des Ego-Fahrzeugs (12) mit den identifizierten Fahrzeugaktionen (16); und
Ausgeben (S5) eines, eine Mehrzahl von Klassen (K) aufweisenden zweiten Datensatzes (DS2), wobei eine jeweilige Klasse (K) der Mehrzahl von Klassen (K) eine Verkehrssituation (VS) des virtuellen Tests repräsentiert.

2. Computerimplementiertes Verfahren nach Anspruch 1, wobei der erste Datensatz (DS1) weitere Sensordaten einer durch eine zweite Mehrzahl fahrzeugseitiger Umfelderkennungsensoren (11) erfassten Fahrt zumindest eines Fellow-Fahrzeugs (18) und/oder weiterer Verkehrsteilnehmer (20) umfasst.

3. Computerimplementiertes Verfahren nach Anspruch 2, wobei durch den ersten Datensatz (DS1) umfasste Datensegmente (14) lateralen und longitudinalen Verhaltens des zumindest einen Fellow-Fahrzeugs (18) und/oder der weiteren Verkehrsteilnehmer (20) bestimmt werden, wobei eine Mehrzahl der bestimmten Datensegmente (14) lateralen und longitudinalen Verhaltens des zumindest einen Fellow-Fahrzeugs (18) und/oder weiterer Verkehrsteilnehmer (20) zum Identifizieren von Fahrzeugaktionen (16) konkateniert werden, und wobei Verkehrssituationen (VS) durch Verknüpfen einer Teilmenge der bestimmten Datensegmente (14) lateralen und longitudinalen Verhaltens des zumindest einen Fellow-Fahrzeugs (18) und/oder weiterer Verkehrsteilnehmer (20) mit den identifizierten Fahrzeugaktionen (16) klassifiziert werden.

4. Computerimplementiertes Verfahren nach Anspruch 3, wobei die klassifizierten Verkehrssituationen (VS) des Ego-Fahrzeugs (12) und des zumindest einen Fellow-Fahrzeugs (18) und/oder der weiteren Verkehrsteilnehmer (20) zu einer das Ego-Fahrzeug (12) und das zumindest eine Fellow-Fahrzeugs (18) und/oder die weiteren Verkehrsteilnehmer (20) umfassenden Interaktion (22) verknüpft werden.

5. Computerimplementiertes Verfahren nach einem der vorhergehenden Ansprüche, wobei bei dem Identifizieren von Fahrzeugaktionen (16) die Datensegmente (14) lateralen und longitudinalen Verhaltens des Ego-Fahrzeugs (12) zu Gruppen zusammengefasst werden.

6. Computerimplementiertes Verfahren nach einem der vorhergehenden Ansprüche, wobei das Bestimmen (S2) von durch den ersten Datensatz (DS1) umfassten Datensegmenten (14) lateralen und longitudinalen Verhaltens des Ego-Fahrzeugs (12) durch Anwenden eines ersten regelbasierten Algorithmus (A1) durchgeführt wird, wobei das Konkatenieren (S3) der Mehrzahl der bestimmten Datensegmente (14) lateralen und longitudinalen Verhaltens des Ego-Fahrzeugs (12) zum Identifizieren von Fahrzeugaktionen (16) durch Anwenden eines zweiten regelbasierten Algorithmus (A2) durchgeführt wird, und wobei das Klassifizieren (S4) von Verkehrssituationen (VS) durch Verknüpfen der Teilmenge der bestimmten Datensegmente (14) lateralen und longitudinalen Verhaltens des Ego-Fahrzeugs (12) mit den identifizierten Fahrzeugaktionen (16) durch Anwenden eines dritten regelbasierten Algorithmus (A3) durchgeführt wird.

7. Computerimplementiertes Verfahren Anspruch 6, wobei der erste regelbasierte Algorithmus (A1), der zweite regelbasierte Algorithmus (A2) und der dritte regelbasierte Algorithmus (A3) jeweils unterschiedliche Regelwerke zur Verarbeitung von durch den jeweiligen Algorithmus empfangenen Eingabedaten umfassen.

8. Computerimplementiertes Verfahren nach Anspruch 4, wobei Parameter der klassifizierten Verkehrssituationen (VS) und/oder Interaktionen (22) zum Erzeugen einer Parameterverteilung eines vorgegebenen Parameterraums extrahiert werden.

9. Computerimplementiertes Verfahren nach einem der vorhergehenden Ansprüche, wobei die Datensegmente (14) lateralen und longitudinalen Verhaltens des Ego-Fahrzeugs (12) eine konstante oder sich ändernde Beschleunigung, Positionsdaten, insbesondere GNSS-Daten, und eine sich daraus ergebende Geschwindigkeit umfassen.

10. Computerimplementiertes Verfahren nach einem der vorhergehenden Ansprüche, wobei die Datensegmente (14) lateralen und longitudinalen Verhaltens des Ego-Fahrzeugs (12) durch Vektoren gebildet sind, wobei bei dem Konkatenieren (S3) der Mehrzahl der bestimmten Datensegmente (14) lateralen und longitudinalen Verhaltens des Ego-Fahrzeugs (12) zum Identifizieren von Fahrzeugaktionen (16) jeweilige Vektoren addiert werden.

11. Computerimplementiertes Verfahren nach einem der vorhergehenden Ansprüche, wobei die Sensordaten der durch die erste Mehrzahl fahrzeugseitiger Umfelderkennungsensoren (10) erfassten Fahrt des Ego-Fahrzeugs (12) Positionsdaten eines GNSS-Sensors, IMU-Daten, Kameradaten, LiDAR-Daten und/oder Radardaten sind, wobei die Sensordaten annotiert sind.

12. Computerimplementiertes Verfahren nach Anspruch 4, wobei auf Basis der klassifizierten Verkehrssituationen (VS) und/oder Interaktionen (22) ein, ein logisches Verkehrsszenario aufweisender dritter Datensatz (DS3) erzeugt wird.

13. Computerimplementiertes Verfahren nach einem der vorhergehenden Ansprüche, wobei die Fahrzeugaktionen (16) einen Richtungswechsel und/oder einen Fahrspurwechsel des Ego-Fahrzeugs (12) und/oder des zumindest einen Fellow-Fahrzeugs (18) und/oder eine Interaktion (22) des Ego-Fahrzeugs (12) mit einem Fußgänger, und die klassifizierten Verkehrssituationen (VS) einen Überholvorgang des Ego-Fahrzeugs (12) und/oder des zumindest einen Fellow-Fahrzeugs (18) umfassen.

14. Computerimplementiertes Verfahren zum Bereitstellen eines trainierten Algorithmus maschinellen Lernens zur Klassifikation von Verkehrssituationen (VS) eines virtuellen Tests, mit den Schritten:
Empfangen (S1') eines ersten Trainingsdatensatzes (TD1) von Sensordaten einer durch eine erste Mehrzahl fahrzeugseitiger Umfelderkennungsensoren (10) erfassten Fahrt eines Ego-Fahrzeugs (12);
Empfangen (S2') eines zweiten Trainingsdatensatzes (TD2), welcher eine Mehrzahl von Klassen (K) aufweist, wobei eine jeweilige Klasse (K) der Mehrzahl von Klassen (K) eine Verkehrssituation (VS) des virtuellen Tests repräsentiert; und
Trainieren (S3') des Algorithmus maschinellen Lernens durch einen Optimierungsalgorithmus, welcher einen Extremwert einer Verlustfunktion zur Klassifikation von Verkehrssituationen (VS) des virtuellen Tests berechnet.

15. System zur Klassifikation von Verkehrssituationen (VS) eines virtuellen Tests, umfassend:
eine erste Mehrzahl fahrzeugseitiger Umfelderkennungsensoren (10) zum Bereitstellen eines ersten Datensatzes (DS1) von Sensordaten einer Fahrt eines Ego-Fahrzeugs (12);
Mittel (24) zum Bestimmen von durch den ersten Datensatz (DS1) umfassten Datensegmenten (14) lateralen und longitudinalen Verhaltens des Ego-Fahrzeugs (12);
Mittel (26) zum Konkatenieren einer Mehrzahl der bestimmten Datensegmente (14) lateralen und
longitudinalen Verhaltens des Ego-Fahrzeugs (12) zum Identifizieren von Fahrzeugaktionen (16);
Mittel (28) zum Klassifizieren von Verkehrssituationen (VS) durch Verknüpfen einer Teilmenge der bestimmten Datensegmente (14) lateralen und longitudinalen Verhaltens des Ego-Fahrzeugs (12) mit den identifizierten Fahrzeugaktionen (16); und
Mittel (30) zum Ausgeben eines, eine Mehrzahl von Klassen (K) aufweisenden zweiten Datensatzes (DS2), wobei eine jeweilige Klasse (K) der Mehrzahl von Klassen (K) eine Verkehrssituation (VS) des virtuellen Tests repräsentiert.
